# EUROPEAN PATENT APPLICATION

(11) **EP 4 773 575 A1**
(43) Date of publication of application: **08.07.2026**
(21) Application number: 24861718.5
(22) Date of filing: 25.07.2024
(51) Int. Cl.: H04L 65/75, H04L 51/10

(54) **RICH MEDIA PROCESSING METHOD BASED ON NEW CALL, DEVICE, AND STORAGE MEDIUM**

(30) Priority: 07.09.2023 CN 202311155659
(71) Applicant: ZTE CORPORATION, Shenzhen, Guangdong 518057 (CN)
(72) Inventor: TENG, Mingnian, Shenzhen, Guangdong 518057 (CN); ZHANG, Bo, Shenzhen, Guangdong 518057 (CN)
(74) Representative: Ziebig Hengelhaupt Intellectual Property Attorneys Patentanwaltskanzlei PartGmbB
(86) International application number: PCT/CN2024/107658
(87) International publication number: WO 2025/050873

(57) **Abstract**

The present application provides a rich media processing method based on a new call, a rich media processing device based on a new call and a storage medium. The method includes: determining access information of a received rich media file, the access information including a target channel source and/or a service type; determining a processing scheme corresponding to the access information, and processing the rich media file based on the corresponding processing scheme, the processing scheme including a verification rule and/or a processing rule; and sending the processed rich media file to a terminal that plays the rich media file.

## Description

### CROSS-REFERENCE TO RELATED APPLICATIONS

This application claims priority to Chinese Patent Application No. 202311155659.X, filed on September 7, 2023, the entire contents of which are incorporated herein by reference.

### TECHNICAL FIELD

The present application relates to the technical field of rich media processing based on a new call, and more particularly to a rich media processing method based on a new call, a rich media processing device based on a new call and a storage medium.

### BACKGROUND

New Call (a new type of call that adds various rich media elements to the user's call) is a powerful alternative to the post-ringback tone era (solving the problem of long playback time in the ringback tone era), making the call more interesting and better enhancing the fun of the user's call process.

The extensive use of rich media elements in calls brought by the new calling system provides users with a better calling experience and gives businesses greater promotional opportunities. However, the new call media sources are diverse and cannot be pre-processed, making it easier to overlook the supervision of media content (in traditional calls, the media played during the call process all come from the operator's server, the relevant media source is singular, and the content is controlled within the operator's server, making the media content controllable), which poses a high security risk (including legality risk).

### SUMMARY

Embodiments of the present application provide a rich media processing method based on a new call, a rich media processing apparatus based on a new call, a rich media processing device based on a new call and a storage medium.

Embodiments of the present application provide a rich media processing method based on a new call, including: determining access information of a received rich media file, the access information including a target channel source and/or a service type; determining a processing scheme corresponding to the access information, and processing the rich media file based on the corresponding processing scheme, the processing scheme including a verification rule and/or a processing rule; and sending the processed rich media file to a terminal that plays the rich media file.

The present application further provides a rich media processing apparatus based on a new call. The apparatus includes a first determination module, a second determination module and a playback module. The first determination module is configured for determining access information of a received rich media file, the access information including a target channel source and/or a service type. The second determination module is configured for determining a processing scheme corresponding to the access information, and processing the rich media file based on the corresponding processing scheme, the processing scheme including a verification rule and/or a processing rule. The playback module is configured for sending the processed rich media file to a terminal that plays the rich media file.

The present application further provides a rich media processing device based on a new call. The rich media processing device based on the new call is a physical node device. The rich media processing device based on the new call includes a memory, a processor, and a rich media processing program based on a new call stored in the memory and executable on the processor. When the rich media processing program based on the new call is executed by the processor, the steps of the rich media processing method based on the new call as described above are implemented.

To achieve the above objective, a storage medium is also provided, on which a rich media processing program based on a new call is stored, when the rich media processing program based on the new call is executed by a processor, the steps of the rich media processing methods based on the new call as described above are implemented.

### BRIEF DESCRIPTION OF THE DRAWINGS

FIG. 1 is a flowchart illustrating a first embodiment of a rich media processing method based on a new call according to the present application.
FIG. 2 is a flowchart illustrating a second embodiment of the rich media processing method based on the new call according to the present application.
FIG. 3 is a flowchart illustrating a third embodiment of the rich media processing method based on the new call according to the present application.
FIG. 4 is a schematic diagram of the device structure of the hardware operating environment involved in the embodiments of the present application.
FIG. 5 is a flowchart illustrating a complete embodiment of the rich media processing method based on the new call according to the present application.
FIG. 6 is a first framework diagram of a rich media processing system based on a new call of the rich media processing method based on the new call of the present application.
FIG. 7 is a second framework diagram of the rich media processing system based on the new call of the rich media processing method based on the new call of the present application.
FIG. 8 is a schematic diagram of a first scenario involving the embodiment of the present application.
FIG. 9 is a schematic diagram of a second scenario involving the embodiment of the present application.

### DETAILED DESCRIPTION OF THE EMBODIMENTS

The specific embodiments described herein are merely illustrative and not intended to limit the scope of the present application.

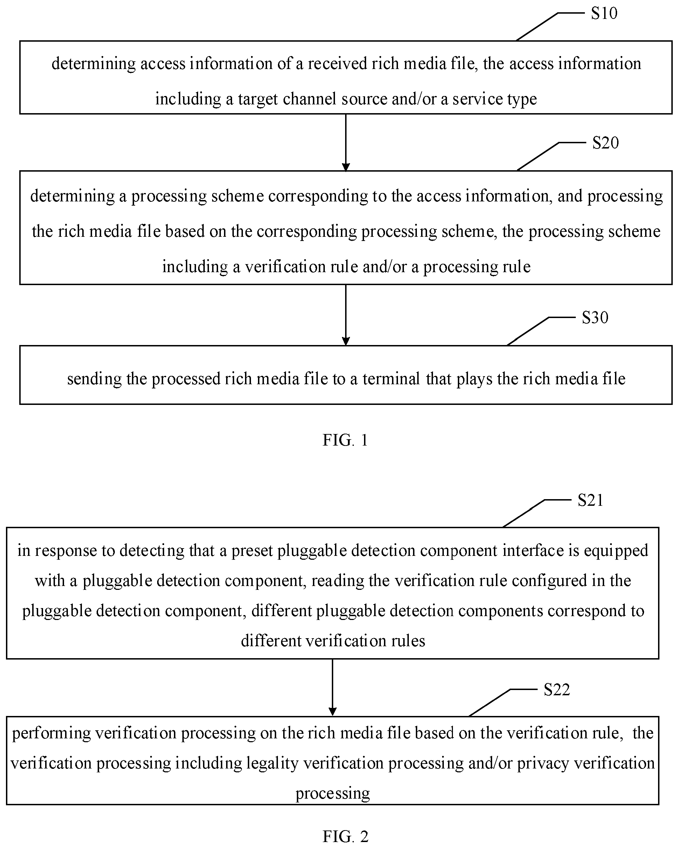

Referring to FIG. 1, FIG. 1 is a flowchart illustrating a first embodiment of a rich media processing method based on a new call according to the present application.

In the first embodiment, the rich media processing method based on the new call includes the following steps:
Step S10, determining access information of a received rich media file, the access information including a target channel source and/or a service type.

Rich media files refer to files that contain animation, sound, video, and/or interactive information. In other words, rich media files include one or a combination of common formats such as streaming media files, sound files, and Flash files.

In this embodiment, the rich media files include files in shared scenarios (containing media data generated by a terminal APP), media files accessed directly by the terminal through the camera (files recorded or displayed through the camera), media files played by a media server, and media files processed by a third party.

The method in this embodiment is implemented by a rich media processing device based on a new call, which can be deployed on a server. The server belongs to a rich media processing system based on a new call, which also includes a terminal and/or a third party. The present application does not impose specific limitations.

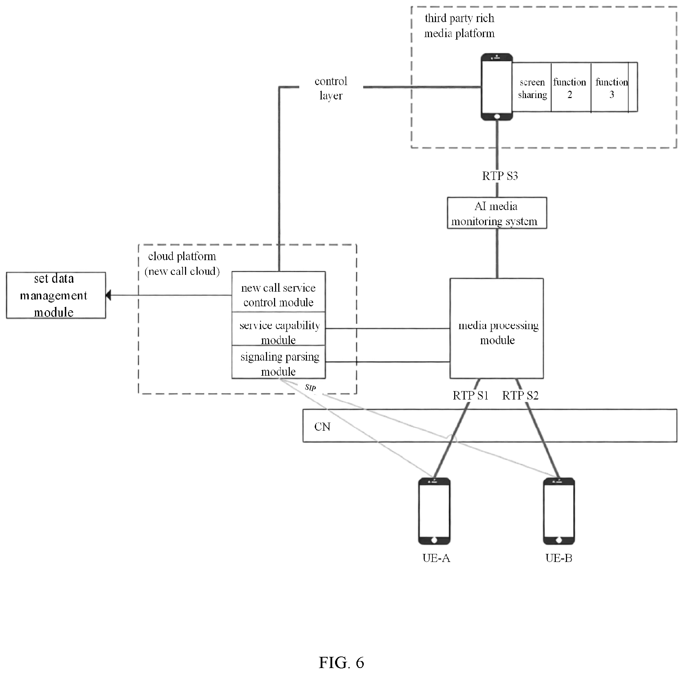

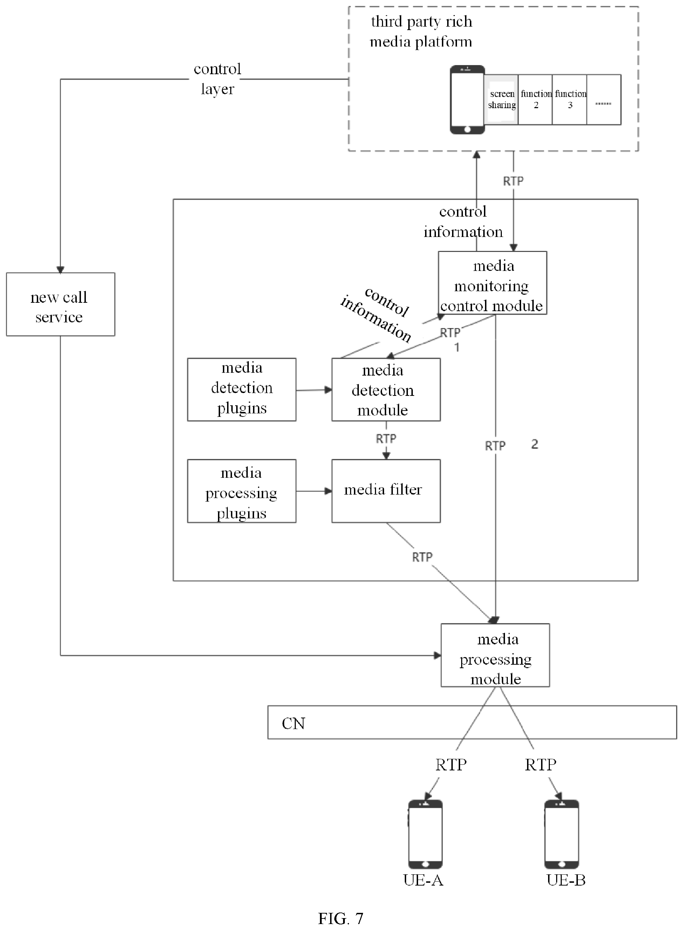

The framework diagram of the rich media processing system based on the new call is shown in FIG. 6 and FIG. 7.

The third party is the party that needs to further process the rich media, and the third party is not necessarily required.

The terminal includes multiple terminals, such as UE-A (first terminal) and UE-B (second terminal) in FIG. 6 and FIG. 7.

The server side shown in FIG. 6 and FIG. 7 can be composed of modules such as data management module, signaling parsing module, service capability module, service control module, media processing module, media detection and control module, media detection module, and media filtering module.

The media detection and control module, the media detection module, and the media filtering module are new modules added in this embodiment.

The data management module primarily provides new call settings and basic data for the service control module; the signaling parsing module is responsible for parsing the underlying core network SIP signaling and handling media playback client requests and other related operations with the media processing module; the service capability module connects the service control module and the signaling parsing module, providing the upper-layer service control module with the capability interface between the lower-layer modules. The service control module, based on user settings, system settings, and third-party instructions, sends control commands to the signaling parsing module or the media processing module through the service capability module. The media processing module performs functions such as media port application, media synthesis, and media playback based on upper-layer instructions or media streams. The media detection and control module primarily performs initial verification of third-party media information (e.g., channel verification) and interacts with the service control module to exchange detection results and prompts. The media detection module provides legality and privacy breach detection functions for third-party media, and also offers pluggable component interfaces, providing a unified interface for third-party media detection modules. The media filtering module processes media content, providing functions such as image cutout, censoring, blurring, and frame dropping, and also provides a unified extension interface, offering a consistent interface for third-party media processing.

The specific application scenario in this embodiment can be as follows: in traditional calls, the media played during the audio playback process all come from the operator's server. The relevant media source is singular, the content is controllable, and the corresponding rich media content does not need to be verified. However, current new calls do not differentiate between media from different channels, resulting in the rich media content of all new call media not being verified. However, the diverse sources of new media and the lack of verification of corresponding rich media content make it easier to overlook the supervision of media content, leading to the risk of illegal and irregular activities.

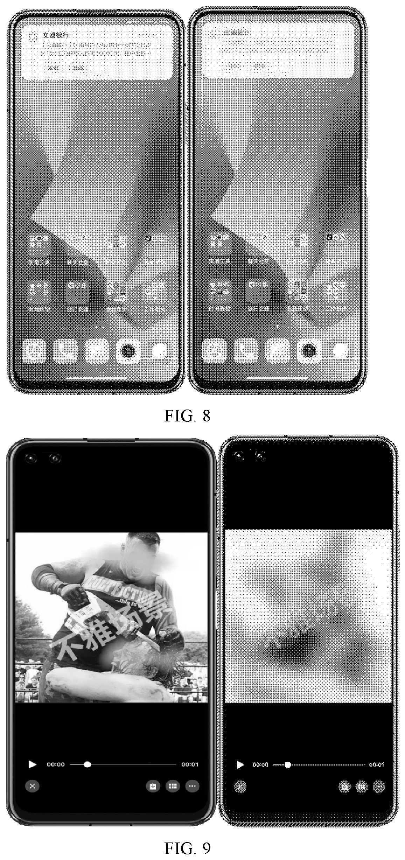

For example, as shown in FIG. 8, when playing media files or sharing the screen, there is a risk of exposing the user's private information to others, which is often imperceptible to the user.

Or, as shown in FIG. 9, when playing media files or sharing the screen, there is a risk of leaking inappropriate behavior (indecent scenes).

In this embodiment, targeted verification rules and/or processing rules can be provided in real time for rich media files from different sources or with different service types, reducing the security risks of new media calls and ensuring compliance with relevant requirements.

The server determines the access information of the received rich media file. The access information may include the target channel source or service type, or it may include both.

The target channel source may originate from a media server, or it may originate from a third party, etc., without specific limitations.

The service type of the access information can be a telephone service, a sharing service, etc. The service can be further categorized, without any specific limitations.

As an example, when the server receives a rich media file from a first terminal (UE-A), it needs to determine the access information of the received rich media file. The access information includes the target channel source and/or the service type.

Step S20, determining a processing scheme corresponding to the access information, and processing the rich media file based on the corresponding processing scheme, the processing scheme including a verification rule and/or a processing rule.

The processing scheme includes the verification rule or the processing rule, or both.

The verification rule specifically refers to how to verify rich media files to determine whether they are illegal or violate regulations.

The processing rule refers to how to process a rich media file if it is determined to be illegal or violate regulations.

The verification rule and/or the processing rule are configurable.

Since the verification rule and/or the processing rule are configurable, they can meet the rich media processing requirements of varying severity in different scenarios.

Different components implement different verification rules and/or processing rules, thus providing corresponding access interfaces, as long as they meet the interface specifications. This greatly improves the flexibility of server-side media verification and processing.

The verification rule and/or the processing rule can be configured in a "plug-and-play" manner, thereby achieving flexible configuration of the verification rule and/or the processing rule.

In this embodiment, after determining the access information, the server determines the processing scheme corresponding to the access information. The processing scheme may be to directly play the rich media file corresponding to the access information after verification, or the processing scheme may be to not play the rich media file corresponding to the access information after verification.

The processing scheme can also involve first verifying the rich media file corresponding to the access information, then processing it, and finally playing it. This processing or verification method can be flexibly adjusted to meet the needs of different scenarios.

For example, the processing scheme can also involve obfuscating the rich media file corresponding to the access information (files with privacy exposure risks) before playback.

The processing scheme can also be other compliant schemes; specific limitations are not imposed.

When the access information includes the target channel source, the determining the processing scheme corresponding to the access information, and processing the rich media file based on the corresponding processing scheme includes: in response to that the target channel source is unreliable, determining the processing scheme corresponding to the access information, and processing the rich media file based on the corresponding processing scheme. If the target source is unreliable, the corresponding rich media file obviously needs to be verified and/or processed. If the target source is reliable, the corresponding rich media file obviously does not need to be verified and/or processed, in order to save processing resources and speed up processing.

The reliability of the target channel is determined by whether it is on a preset blacklist or whitelist. If the target channel is on the whitelist, it is considered reliable. If the target channel is on the blacklist, it is considered unreliable.

In this embodiment, by setting up the blacklist and whitelist, the speed of verification and/or processing can be further reduced, thereby improving the processing speed of rich media based on the new call.

The preset channel blacklist and whitelist are configurable.

That is, due to changes in the scenario or changes in the reputation of different channels, it is necessary to configure the blacklist and whitelist.

Random checks can be performed on rich media files from different channels. Based on the results, channels with high reputations can be added to the whitelist, and channels with low reputations can be added to the blacklist, or removed from the whitelist.

Step S30, sending the processed rich media file to a terminal that plays the rich media file.

In this embodiment, after processing the rich media file, the processed rich media file is sent to the terminal that plays the rich media file (such as the second terminal UE-B) so that the second terminal can play the corresponding rich media file.

The present application provides a rich media processing method based on a new call, a rich media processing apparatus based on a new call, a rich media processing device based on a new call and a storage medium. Compared with the high security risks of new media calls in related art, in the present application, the method includes: determining access information of a received rich media file, the access information including a target channel source and/or a service type; determining a processing scheme corresponding to the access information, and processing the rich media file based on the corresponding processing scheme, the processing scheme including a verification rule and/or a processing rule; and sending the processed rich media file to a terminal that plays the rich media file. In the present application, it can provide targeted verification rules and/or processing rules in real time for rich media files from different sources or for different service types, reducing the security risks of new media calls and making them comply with relevant compliance requirements.

As shown in FIG. 2, based on the first embodiment, the second embodiment of the present application is proposed. In this embodiment, when the processing scheme includes the verification rule, the step S20 includes: step S21, in response to detecting that a preset pluggable detection component interface is equipped with a pluggable detection component, reading the verification rule configured in the pluggable detection component, different pluggable detection components corresponding to different verification rules. In this embodiment, a preset pluggable detection component interface is provided, which can be a physical interface or a virtual interface.

When the preset pluggable detection component interface is the physical interface, if a verification component is detected plugged into the physical interface, the verification rules configured in the pluggable detection component are read. If the verification component plugged into the physical interface is detected to be unplugged, verification is not performed based on the corresponding verification rules.

When the preset pluggable detection component interface is the virtual interface, if a verification component is detected connected to the virtual interface, the verification rules configured for the corresponding virtual component are read.

Different pluggable detection components have different verification rules.

Step S22, performing verification processing on the rich media file based on the verification rule, the verification processing including legality verification processing and/or privacy verification processing.

In this embodiment, based on the verification rule, the rich media file is subjected to verification processing, which includes legality verification processing and/or privacy verification processing. The legality verification specifically refers to the verification process to determine whether something is illegal or violates regulations. The privacy verification, on the other hand, refers to whether the corresponding rich media file contains sensitive information such as ID numbers or financial details.

The verifying the rich media file based on the verification rule includes: in response to that a current bandwidth is less than a first preset bandwidth, scanning a portion of the rich media file for verification; and in response to that a current bandwidth is greater than a second preset bandwidth, scanning an entire image in the rich media file for verification, the second preset bandwidth is greater than the first preset bandwidth.

In this embodiment, when bandwidth is smaller, considering media processing latency, a portion of the media can be scanned, and full-frame scanning can be configured when bandwidth is larger and processing latency is low. In other words, this embodiment satisfies both verification requirements and varying latency requirements.

If the processing scheme includes the processing rule, after the verifying the rich media file based on the verification rule, the method includes: in response to that the legality verification fails, and a preset pluggable processing component interface is equipped with a pluggable processing component, reading the processing rule configured in the pluggable processing component, the processing rule includes a filtering rule, and different pluggable processing components correspond to different processing rules; and filtering the rich media file based on the filtering rule.

This embodiment describes how to perform subsequent processing on rich media files. If the legality verification fails (there is a non-compliant or illegal file), and a pluggable processing component is detected corresponding to the preset pluggable processing component interface, then the processing rule configured in the pluggable processing component is read. Then, the rich media file is processed based on the processing rule, the processing rule including the filtering rule. Specifically, illegal files can be filtered out based on these rules, while other verified files are sent to the corresponding playback terminal, such as a second terminal, for playback. In addition, since rich media files can include a lot of content, only a part of the content may contain illegal or non-compliant information. Therefore, it is only necessary to process the illegal or non-compliant part, rather than processing all the content, in order to reduce resource consumption and improve efficiency.

In this embodiment, different pluggable processing components have different processing rules. Since different pluggable processing components have different processing rules, users can store the corresponding pluggable processing components themselves to meet their actual needs.

In an embodiment, the performing the filtering process on the rich media file based on the filtering rule includes: performing the filtering process on a portion or all of the rich media file based on the filtering rule, the filtering process including blurring of sensitive information or reduction of sensitive frames.

In this embodiment, if the channel type of the rich media file is unreliable, the server will send the rich media file to the media detection module for detection. The media detection module will then feed back the detection results to the media detection control module. If the detection results indicate that the rich media file is illegal or in violation of regulations, the service will be terminated or the rich media file will be directly sent to the media filtering module (which will filter out certain elements based on filtering rules, such as blurring sensitive information or reducing the number of sensitive frames). After processing the rich media file, the processed file will be sent to the media processing module for playback on the corresponding terminal. Meanwhile, the media processing module also provides feedback prompts to the service control module, which then sends the relevant prompts to the caller A (the first terminal) through the media processing module.

In this embodiment, the corresponding rich media files are verified or processed by flexibly configurable verification rules and/or processing rules, thereby expanding the rich media file processing scenarios for new calls.

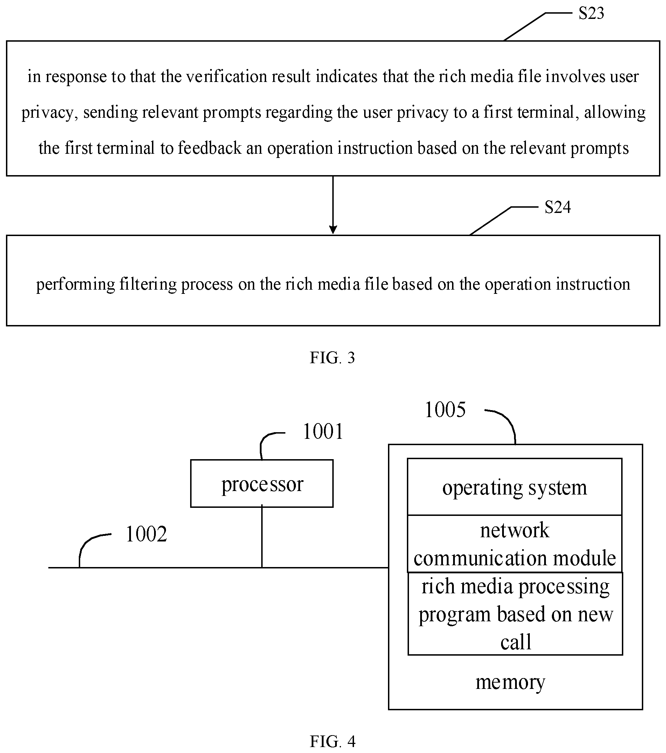

As shown in FIG. 4, based on the first embodiment and the second embodiment, the third embodiment of the present application is proposed. In this embodiment, after the step S22, the method further includes: step S23, in response to that the verification result indicates that the rich media file involves user privacy, sending relevant prompts regarding the user privacy to a first terminal, allowing the first terminal to feedback an operation instruction based on the relevant prompts; and step S24, performing filtering process on the rich media file based on the operation instruction.

In this embodiment, new calls pose a risk of user privacy breaches. Since new calls offer applications such as screen sharing, the risk of users exposing their personal information to others increases dramatically. This is often imperceptible to users; therefore, protecting user privacy in new call scenarios is extremely important.

If the verification result indicates that the rich media file involves user privacy (such as containing financial information or identity information), then the relevant prompt information concerning user privacy is fed back to the first terminal, so that the first terminal can provide operation instructions based on the relevant prompt information. The feedback operation instruction can be an instruction to remove blurring, obscuring, or disable the function. Upon receiving the operation instruction, the server filters the rich media file and also sends a text message or on-screen text message to the user (indicating that blurring or obscuring has been completed).

In the present application, by performing filtering process on the rich media file, the leakage of user privacy can be avoided.

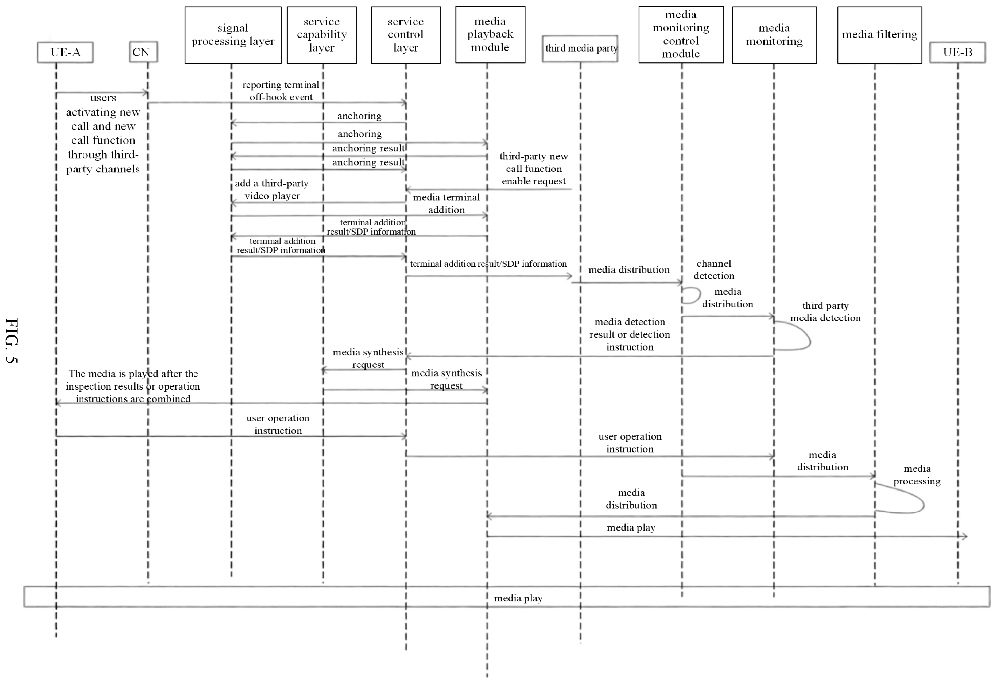

In this embodiment, an overall implementation example is provided (as shown in FIG. 5): In this example, the caller A (UE-A, the first terminal) is a new caller, and the caller A has enabled third-party channel functions, such as screen sharing. In addition, the server has also set media channel information (channel source information).

When caller A calls called recipient B (UE-B, the first terminal), after being parsed by the signaling processing layer, the call event of the new call subscription is reported to the service control module (service control layer) through the service capability module (service capability layer). After the service control module receives the off-hook event (UE-B answer event), as shown in FIG. 5 and FIG. 6, it sends an anchoring request (a request to obtain media information, and the media information specifically includes media content, playback type, and other information) through the media processing module (media server). The media processing module returns the anchoring result (media information) to the service control module, and then establishes a connection between the service control module and the third-party channel.

The media processing module communicates with the terminal, but it does not connect to third-party channels (third-party new call channel platforms). Therefore, the relevant media information needs to be sent to the third-party channel through the service control module in order to establish a connection with the third-party channel. (This process specifically includes: the third-party channel initiates a new call function request to the service control module; the service control module sends a media terminal addition request (to obtain media information) to the signaling parsing module through the service capability module; after receiving the terminal addition request, the signaling parsing module applies for terminal addition from the media processing module; after successful terminal addition, it returns the terminal addition information and its media processing module SDP information to the service control module.)

The service control module sends the received SDP information to the third-party new call channel platform (the third-party new call channel platform establishes a communication connection with the media processing module through the SDP information), and the third-party channel platform sends rich media files to the media detection and control module through the corresponding SDP information. The media detection and control module determines whether a media channel is unreliable based on the media channel information. If the channel type is reliable, it directly plays the audio to the called recipient B (media processing module). If the channel type is unreliable, the media information is sent to the media detection module, which then provides the detection results. If the detection results indicate that the media is illegal or non-compliant, the service is terminated according to preset rules, or the media is directly sent and filtered (by the media filtering module) (e.g., blurring sensitive information, reducing sensitive frames, etc.). After processing, the media is sent to the corresponding terminal for playback, and a prompt message is sent to the service control module. The service control module then uses the media processing module to send the relevant prompt information to the caller A. If the detection results indicate that the media involves user privacy, a prompt message and operation instructions will be sent to the service control module. The service control module sends relevant prompts to caller A via the media processing module. User A sends operation commands to the media detection and control module, which then sends them to the media filter to process the media according to the commands (e.g., blurring sensitive information, reducing sensitive frames, etc.); the processed media is then sent to the media processing module, which plays the audio to user B.

Referring to FIG. 4, FIG. 4 is a schematic diagram of the device structure of the hardware operating environment involved in the embodiments of the present application.

As shown in FIG. 4, a rich media processing device based on a new call can include a processor 1001, a memory 1005, and a communication bus 1002. The communication bus 1002 is used to enable communication between the processor 1001 and the memory 1005.

In an embodiment, the rich media processing device based on the new call can further include a user interface, a network interface, a camera, a Radio Frequency (RF) circuitry, sensors, a Wi-Fi module, and so on. The user interface can include a display screen, an input submodule such as a keyboard, and can also include standard wired and wireless interfaces. The network interface can include standard wired and wireless interfaces (such as a Wi-Fi interface).

Those skilled in the art will understand that the structure of the rich media processing device based on the new call shown in FIG. 4 does not constitute a limitation on the rich media processing device based on the new call, and may include more or fewer components than shown, or a combination of certain components, or differently arranged components.

As shown in FIG. 4, the memory 1005, serving as a storage medium, may include an operating system, a network communication module, and a rich media processing program based on a new call. The operating system is a program that manages and controls the hardware and software resources of the rich media processing device based on the new call, supporting the operation of the rich media processing program based on the new call and other software and/or programs. The network communication module is used to enable communication between the cameras within the memory 1005, as well as communication with other hardware and software within the device.

In the rich media processing device based on the new call shown in FIG. 4, the processor 1001 executes the rich media processing program based on the new call stored in the memory 1005 to implement the steps of the rich media processing method based on the new call described above.

The specific implementation of the rich media processing device based on the new call in the present application is basically the same as the embodiments of the rich media processing method based on the new call described above, and will not be repeated here.

The present application further provides a rich media processing apparatus based on a new call. The apparatus includes a first determination module, a second determination module and a playback module. The first determination module is configured for determining access information of a received rich media file, the access information including a target channel source and/or a service type. The second determination module is configured for determining a processing scheme corresponding to the access information, and processing the rich media file based on the corresponding processing scheme, the processing scheme including a verification rule and/or a processing rule. The playback module is configured for sending the processed rich media file to a terminal that plays the rich media file.

In one possible implementation of the present application, the verification rule and/or the processing rule are configurable.

In one possible implementation of the present application, when the access information includes the target channel source, the rich media processing apparatus based on the new call is configured for: in response to that the target channel source is unreliable, determining the processing scheme corresponding to the access information, and processing the rich media file based on the corresponding processing scheme.

In one possible implementation of the present application, a reliability of the target channel source is determined by whether the target channel source is in a preset channel blacklist or whitelist, and the preset channel blacklist or whitelist is configurable.

In one possible implementation of the present application, when the processing scheme includes the verification rule, the rich media processing apparatus based on the new call is configured for: in response to detecting that a preset pluggable detection component interface is equipped with a pluggable detection component, reading the verification rule configured in the pluggable detection component, different pluggable detection components correspond to different verification rules; and performing verification processing on the rich media file based on the verification rule, the verification processing including legality verification processing and/or privacy verification processing.

In one possible implementation of the present application, the rich media processing apparatus based on the new call is configured for: in response to that a current bandwidth is less than a first preset bandwidth, scanning a portion of the rich media file for verification; and in response to that a current bandwidth is greater than a second preset bandwidth, scanning an entire image in the rich media file for verification, the second preset bandwidth is greater than the first preset bandwidth.

In one possible implementation of the present application, the rich media processing apparatus based on the new call is configured for: in response to that the legality verification fails, and a preset pluggable processing component interface is equipped with a pluggable processing component, reading the processing rule configured in the pluggable processing component, the processing rule includes a filtering rule, and different pluggable processing components correspond to different processing rules; and performing filtering process on the rich media file based on the filtering rule.

In one possible implementation of the present application, the rich media processing apparatus based on the new call is configured for: performing the filtering process on a portion or all of the rich media file based on the filtering rule, the filtering process including blurring of sensitive information or reduction of sensitive frames.

In one possible implementation of the present application, when the processing scheme includes the processing rule, the rich media processing apparatus based on the new call is configured for: in response to that the verification result indicates that the rich media file involves user privacy, sending relevant prompts regarding the user privacy to a first terminal, allowing the first terminal to feedback an operation instruction based on the relevant prompts; and performing filtering process on the rich media file based on the operation instruction.

The specific implementation of the rich media processing apparatus based on the new call in the present application is basically the same as the embodiments of the rich media processing method based on the new call described above, and will not be repeated here.

Embodiments of the present application provide a storage medium that stores one or more programs, which can be executed by one or more processors to implement the steps of the rich media processing method based on the new call as described above.

The specific implementation of the storage medium in the present application is basically the same as the embodiments of the rich media processing method based on the new call as described above, and will not be repeated here.

The present application also provides a computer program product, including a computer program that, when executed by a processor, implements the steps of the aforementioned rich media processing method based on the new call.

The specific implementation of the computer program product of the present application is basically the same as the embodiments of the rich media processing method based on the new call described above, and will not be repeated here.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element.

The serial numbers of the foregoing embodiments of the present application are only for description, and do not represent the advantages and disadvantages of the embodiments.

Through the description of the above embodiment, those skilled in the art can clearly understand that the above-mentioned embodiments can be implemented by software plus a necessary general hardware platform, of course, it can also be implemented by hardware, but in many cases the former is a better implementation. Based on this understanding, the technical solution of the present application can be embodied in the form of software product in essence or the part that contributes to the existing technology. The computer software product is stored on a storage medium (such as ROM/RAM, magnetic disk, optical disk) as described above, including several instructions to cause a terminal device (which can be a mobile phone, a computer, a server, an air conditioner, or a network device, etc.) to execute the method described in each embodiment of the present application.

The above are only some embodiments of the present application, and do not limit the scope of the present application thereto. Under the concept of the present application, equivalent structural transformations made according to the description and drawings of the present application, or direct/indirect application in other related technical fields are included in the scope of the present application.

## Claims

1. A rich media processing method based on a new call, **characterized by** comprising:
determining access information of a received rich media file, wherein the access information comprises a target channel source and/or a service type;
determining a processing scheme corresponding to the access information, and processing the rich media file based on the corresponding processing scheme, wherein the processing scheme comprises a verification rule and/or a processing rule; and
sending the processed rich media file to a terminal that plays the rich media file.

2. The rich media processing method based on the new call according to claim 1, wherein the verification rule and/or the processing rule are configurable.

3. The rich media processing method based on the new call according to claim 1, wherein when the access information comprises the target channel source, the determining the processing scheme corresponding to the access information, and processing the rich media file based on the corresponding processing scheme comprises:
in response to that the target channel source is unreliable, determining the processing scheme corresponding to the access information, and processing the rich media file based on the corresponding processing scheme.

4. The rich media processing method based on the new call according to claim 3, wherein a reliability of the target channel source is determined by whether the target channel source is in a preset channel blacklist or whitelist, and the preset channel blacklist or whitelist is configurable.

5. The rich media processing method based on the new call according to claim 1, wherein when the processing scheme comprises the verification rule, the determining the processing scheme corresponding to the access information, and processing the rich media file based on the corresponding processing scheme comprises:
in response to detecting that a preset pluggable detection component interface is equipped with a pluggable detection component, reading the verification rule configured in the pluggable detection component, wherein different pluggable detection components correspond to different verification rules; and
performing verification processing on the rich media file based on the verification rule, wherein the verification processing comprises legality verification processing and/or privacy verification processing.

6. The rich media processing method based on the new call according to claim 5, wherein the verifying the rich media file based on the verification rule comprises:
in response to that a current bandwidth is less than a first preset bandwidth, scanning a portion of the rich media file for verification; and
in response to that a current bandwidth is greater than a second preset bandwidth, scanning an entire image in the rich media file for verification, wherein the second preset bandwidth is greater than the first preset bandwidth.

7. The rich media processing method based on the new call according to claim 5, wherein when the processing scheme comprises the processing rule, after the verifying the rich media file based on the verification rule, the method comprises:
in response to that the legality verification fails, and a preset pluggable processing component interface is equipped with a pluggable processing component, reading the processing rule configured in the pluggable processing component, wherein the processing rule comprises a filtering rule, and different pluggable processing components correspond to different processing rules; and
performing filtering process on the rich media file based on the filtering rule.

8. The rich media processing method based on the new call according to claim 7, wherein the performing the filtering process on the rich media file based on the filtering rule comprises:
performing the filtering process on a portion or all of the rich media file based on the filtering rule, wherein the filtering process comprises blurring of sensitive information or reduction of sensitive frames.

9. The rich media processing method based on the new call according to claim 5, wherein when the processing scheme comprises the processing rule, after the verifying the rich media file based on the verification rule, the method comprises:
in response to that the verification result indicates that the rich media file involves user privacy, sending relevant prompts regarding the user privacy to a first terminal, allowing the first terminal to feedback an operation instruction based on the relevant prompts; and
performing filtering process on the rich media file based on the operation instruction.

10. A rich media processing device based on a new call, **characterized by** comprising: a memory, a processor and a rich media processing program based on a new call stored on the memory and executable on the processor, wherein when the processor executes the rich media processing program based on the new call, the rich media processing method based on the new call according to any one of claims 1 to 9 is implemented.

11. A storage medium, **characterized in that** the storage medium stores a rich media processing program based on a new call, and the rich media processing program based on the new call, when executed by a processor, implements the rich media processing method based on the new call according to any one of claims 1 to 9.
